# EUROPÄISCHE PATENTSCHRIFT

(11) **EP 1 659 301 B1**
(45) Veröffentlichungstag und Bekanntmachung des Hinweises auf die Patenterteilung: **30.01.2008**
(21) Anmeldenummer: 05110801.7
(22) Anmeldetag: 16.11.2005
(51) Int. Cl.: F16B 39/10

(54) **Schraubenverbindung mit Verdrehsicherung**
Screw joint with an anti-twist plate
Joint de vis avec une plaque anti-tournent

(30) Priorität: 22.11.2004 EP 04405720
(43) Veröffentlichungstag der Anmeldung: 24.05.2006
(73) Patentinhaber: INVENTIO AG, 6052 Hergiswil (CH)
(72) Erfinder: Illedits, Thomas, 2491 Neufeld (AT); Hölzl, Hubert, 2440 Reisenberg (AT)
(74) Vertreter: Gaussmann, Andreas

(56) Entgegenhaltungen:
- DE-U1- 8 609 005
- US-A- 6 009 770

## Beschreibung

Die Erfindung betrifft eine Schraubenverbindung mit Verdrehsicherung zum Verbinden von Bauteilen mittels mindestens einer Schraube und mittels mindestens einer Mutter, wobei als Verdrehsicherung Keilmittel vorgesehen sind.

Aus der Offenlegungsschrift DE 100 60 963 A1 ist eine Schraubenverbindung mit Keilmitteln bekannt geworden, wobei die Keilmittel als Verdrehsicherung dienen. Eine Schraube hält zwei Bauteile zusammen. Der Schraubenkopf liegt auf der Grundfläche einer im einen Bauteil angeordneten Senkbohrung auf. Die Achse der Senkbohrung ist gegenüber der Schraubenachse um eine Exzentrizität verschoben. Keilmittel liegen am Schraubenkopf und an der Wandfläche der Senkbohrung an. Beim Aufdrehen der Schraube werden die Keilmittel zunehmend zwischen Schraubenkopf und Wandfläche eingespannt, wobei die Schraube festgehalten wird und gegen Schwingungs- und Querbelastungen unempfindlich wird.

Ein Nachteil der bekannten Einrichtung liegt darin, dass eine zur Gewindebohrung exzentrische Senkbohrung notwendig ist. Ausserdem sind die Keilmittel in der Form eines Klotzes mit Anlagefläche und Schraube aufwändig.

Aus der DE 86 09 005.4 U1 ist ein Sicherungselement zur Sicherung einer Schraube gegen selbsttätiges Lösen bekannt geworden. Die zwei Bauteile verbindende Schraube wird mittels Schlüssel festgezogen. Dann wird ein aus Kunststoff bestehendes Sicherungselement auf den Schraubenkopf gelegt und mittels eines Hohlstempels und mit einem kräftigen Hammerschlag über den Sechskantschraubenkopf und in eine Einfräsung des einen Bauteils gedrückt. Zum Lösen der Schraubverbindung wird ein Meissel an einer Schräge des Sicherungselementes angesetzt und das Sicherungselement herausgehebelt.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Schraubenverbindung mit Verdrehsicherung zu schaffen, die einfach und leicht montierbar ist.

Vorteilhafte Weiterbildungen der Erfindung sind in den abhängigen Patentansprüchen angegeben.

Die durch die Erfindung erreichten Vorteile sind im wesentlichen darin zu sehen, dass mit der erfindungsgemässen Exzenterverbindung eine einfache Montage mit wenigen Teilen machbar ist und dadurch wertvolle Arbeitszeit eingespart werden kann. Zusätzliche Bohrarbeiten oder formschlüssige Keilmittel mit Anlageflächen entfallen.

Die erfindungsgemässe Exzenterverbindung ist einfacher, leichter, billiger und unkomplizierter herzustellen als vergleichbare Schraubenverbindungen mit Keilmitteln. Schnelleres und leichteres Montieren bzw. Demontieren und die Verwendung bzw. Benutzung weniger Teile sind ökonomisch vorteilhaft. Die Montagearbeit und der Montagedurchlauf der Fahrtreppe wird dadurch wesentlich verkürzt.

Anhand der beiliegenden Figuren wird die vorliegende Erfindung näher erläutert.

Es zeigen:
Fig. 1
   einen oberen Kopfteil einer Fahrtreppe mit Fachwerk,
Fig. 2, Fig. 3, Fig. 4
   eine erfindungsgemässe Schraubenverbindung vor, während und nach der Montage,
Fig. 5
   Einzelheiten einer Konsole und
Fig. 6
   Einzelheiten eines Exzenterelementes.

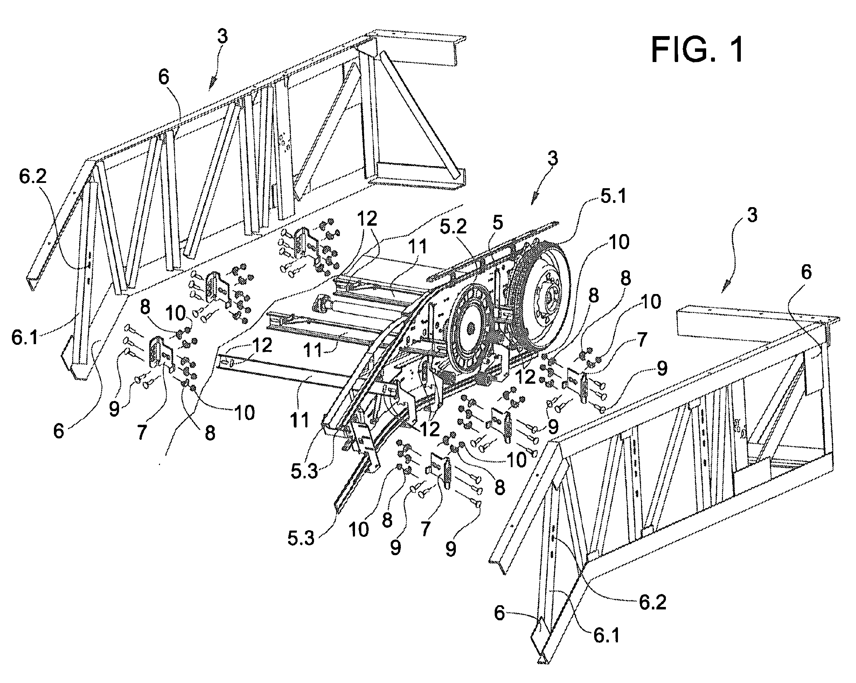

Fig. 1 zeigt einen oberen Kopfteil 3 einer Fahrtreppe bzw. eines Fahrsteiges mit Schienenblock 5 und Fachwerk 6. Der Schienenblock 5 umfasst ein Antriebsrad 5.1 für den Antrieb eines Kettenbandes der Stufen bzw. Paletten, ein Antriebsrad 5.2 für den Antrieb des Handlaufes und Führungsschienen 5.3 für die Führung der Stufenrollen bzw. Palettenrollen.

Der Schienenblock 5 wird mittels Schraubenverbindungen mit dem Fachwerk 6 verbunden. Eine Konsole 7 dient als Verbindungsteil zwischen Schienenblock 5 und Fachwerk 6. Die Konsole 7 wird mittels Schrauben 9, Muttern 10 und Exzenterelementen 8 mit dem Schienenblock 5 bzw. Querträgern 11 mit Langlöchern 12 bzw. mit Trägern 6.1 mit Langlöchern 6.2 des Fachwerkes 6 verbunden. Die dadurch entstehende verdrehsichere, formschlüssige Verbindung bildet einen kompakten, dauerhaften, ausreichend dimensionierten Kraftanschluss. Zusätzliche Schweissarbeiten oder Verstiftungsarbeiten entfallen. Beim Festziehen der Schrauben 9 und Muttern 10 verdrehen sich die Exzenter 8 und werden in Ausnehmungen 7.2 formschlüssig und fest.

Mit der erfindungsgemässen Verbindung kann wertvolle Arbeitszeit gespart werden. Die Verbindung ist einfacher, billiger, leichter und unkomplizierter in der Herstellung. Schweissen, Putzen mit Schlackenhammer und Drahtbürste sowie Bohren und Passstifte einschlagen entfallen.

Weitere Bauteile (beispielsweise Kammplatte oder Balustrade) der Fahrtreppe bzw. des Fahrsteiges können auch mittels Schrauben 9 und Exzentern 8 und Muttern 10 wie oben gezeigt verbunden werden.

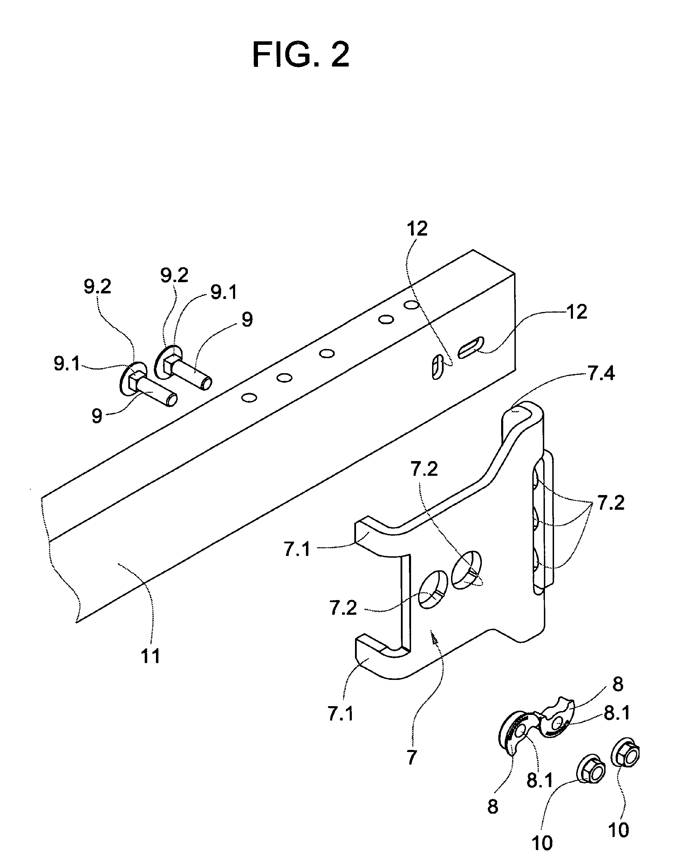

Fig. 2 zeigt die erfindungsgemässe Schraubenverbindung in Explosionsdarstellung, wobei die Konsole 7 mit dem Querträger 11 zu verbinden ist. Am Querträger 11 ist ein Langloch 12 hoch und ein Langloch 12 quer angeordnet. Die Langlöcher 12 können auch schräg bzw. schief angeordnet sein. Der Vierkant 9.1 der Schraube 9 passt in das Langloch 12 und verhindert ein Verdrehen der Schraube 9. Der Kopf 9.2 steht am Langloch 12 an bzw. liegt am Querträger 11 auf. Die Konsole 7 weist Nasen 7.1 auf, die der Zentrierung der Konsole 7 am Querträger 11 dienen. Weiters sind an der Konsole 7 Ausnehmungen 7.2 vorgesehen. Der Durchmesser des als Keilmittel wirkenden Exzenterelementes 8, im weiteren Exzenter 8 genannt, passt auf den leicht grösseren Durchmesser der Ausnehmungen 7.2, bzw. die Exzenter 8 passen in die Ausnehmungen 7.2. Auf der Schmalseite der Konsole 7 sind weitere Ausnehmungen 7.2 vorgesehen, die der Verbindung der Konsole 7 mit dem Träger 6.1 dienen.

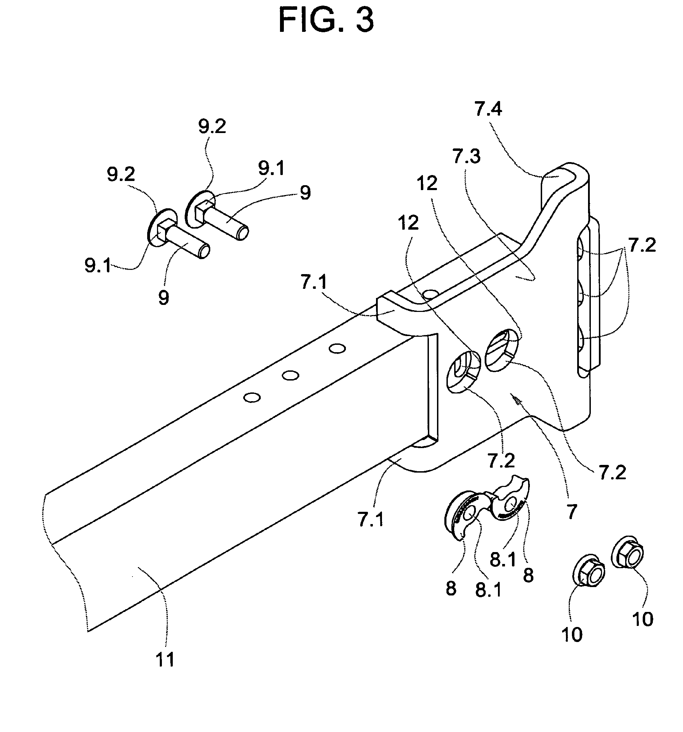

Fig. 3 zeigt die auf den Querträger 11 aufgesetzte Konsole 7, wobei die Ausnehmungen 7.2 mit den Langlöchern 12 gleichliegend sind.

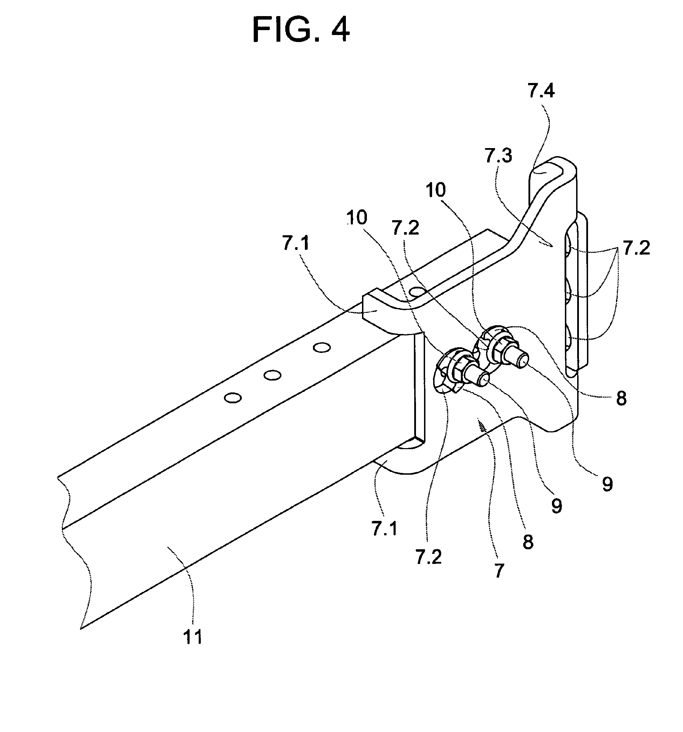

Fig. 4 zeigt die fertig am Querträger 11 montierte Konsole 7. Die Exzenter 8 sind in die Ausnehmungen 7.2 eingesetzt. Die Schrauben 9 durchdringen die Langlöcher 12 und die exzentrischen Bohrungen 8.1 bzw. Löcher der Exzenter 8. Die Muttern 10 sind auf die Schrauben 9 aufgeschraubt worden und festgezogen worden. Beim Festziehen der Muttern 10 sind die Exzenter 8 in ihren Ausnehmungen 7.2 reib- und kraftschlüssig verdreht worden. Mit der Exzentrizität des Exzenters 8 gegenüber der Schraube 9 bzw. der Bohrung 8.1 gegenüber der Ausnehmung 7.2 wird eine Schraubenverbindung mit Verdrehsicherung hergestellt.

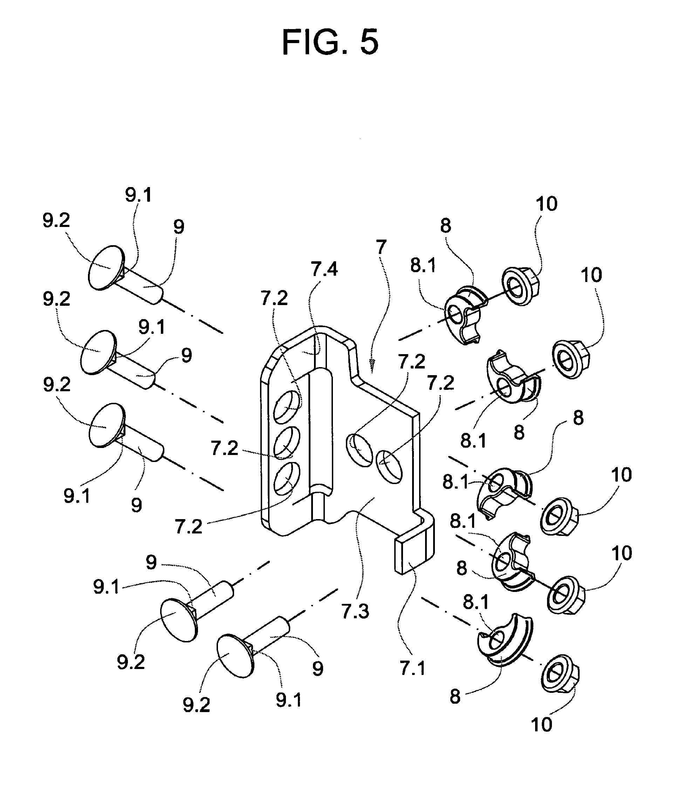

Fig. 5 zeigt Einzelheiten der winkelförmigen Konsole 7 bestehend aus einem ersten Schenkel 7.3 mit Nase 7.1 und einem zweiten Schenkel 7.4. Am ersten Schenkel 7.3 sind zwei Ausnehmungen 7.2 für die Schraubenverbindung mit dem Querträger 11 und am zweiten Schenkel 7.4 sind drei Ausnehmungen 7.2 für die Schraubenverbindung mit dem Träger 6.1 vorgesehen. Konsole 7, Schrauben 9, Exzenter 8 und Muttern 10 bilden eine verdrehgesicherte Schraubenverbindung mit dem Querträger 11 bzw. mit dem Träger 6.1 des Fachwerkes 6 wie obenstehend dargelegt.

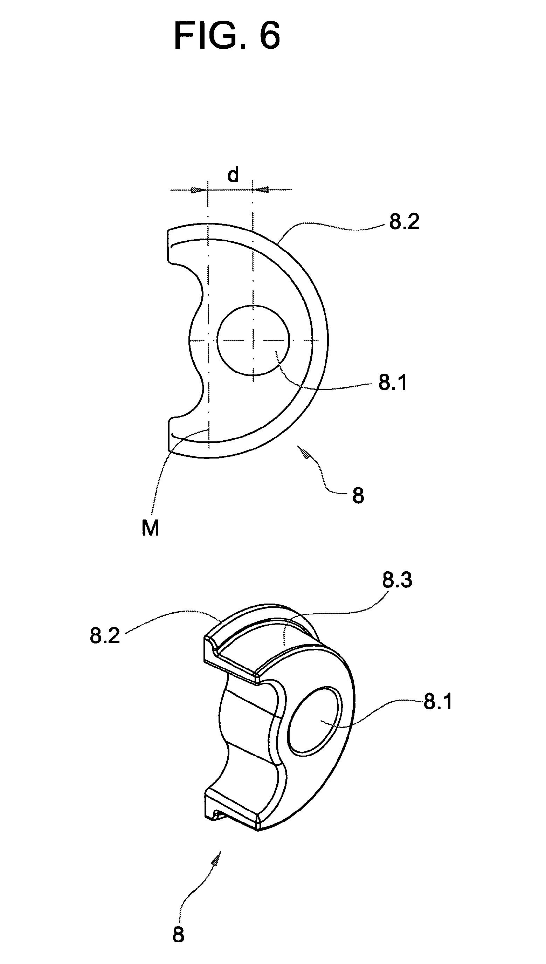

Fig. 6 zeigt Einzelheiten des Exzenters 8. Der Exzenter 8 hat im wesentlichen die Form eines halben Zylinders mit einem als Anschlag dienenden Kragen 8.2 am einen Ende, wobei der Mantel bzw. Aussenfläche als Gleitfläche 8.3 dient, die beim Einschieben und Verdrehen in der Ausnehmung 7.2 gleitet. Der Kragen 8.2 verhindert ein Einsinken bzw. Durchsinken des Exzenters 8 in die Ausnehmung 7.2, bzw. der Kragen 8.2 stützt sich am Rand der Ausnehmung 7.2 ab. Die Exzentermitte ist mit der Linie M bezeichnet. Das Zentrum der exzentrischen Bohrung 8.1 ist um die Distanz d aus der Exzentermitte M verschoben, wobei die Exzentermitte M der Mitte der Ausnehmung 7.2 entspricht. Beim Zudrehen bzw. Anziehen der Mutter 10 verdreht sich der als Keilmittel wirkende Exzenter 8 um die Schraube 9 und verkeilt sich durch seine Exzentrizität in der Ausnehmung 7.2. Der verkeilte Exzenter 8 verhindert ein unerlaubtes Lösen bzw. ein unerlaubtes Aufdrehen der Mutter 10.

Der Querträger 11 bzw. der Träger 6.1 kann auch nur mit einer Schraube 9, einem Exzenter 8 und einer Mutter 10 mit der Konsole 7 verbunden sein. Querträger 11 und Träger 6.1 können auch ohne Konsole 7 direkt verbunden sein. Die Ausnehmungen 7.2 sind dann an einem der beiden Träger angeordnet.

Die erfindungsgemässe Schraubenverbindung kann auch in anderen Einrichtungen (beispielsweise Aufzüge, Seilbahnen oder Einrichtungen der Fördertechnik oder des Maschienenbaus) als Fahrtreppen oder Fahrsteigen zur Verbindung von Bauteilen verwendet werden.

## Patentansprüche

1. Schraubenverbindung mit Verdrehsicherung zum Verbinden von Bauteilen (11,7,6.1) mittels mindestens einer Schraube (9) und mittels mindestens einer Mutter (10), wobei als Verdrehsicherung Keilmittel (8) vorgesehen sind,
**dadurch gekennzeichnet,**
**dass** am einen Bauteil (11,7,6.1) eine Bohrung (12) und am anderen Bauteil (11,7,6.1) eine Ausnehmung (7.2) für die Aufnahme eines als Keilmittel wirkenden Exzenterelementes (8) vorgesehen ist, wobei die Schraube (9) die Bohrung des einen Bauteils (11,7,6.1) und eine Bohrung (8.1) des Exzenterelementes (8) durchdringt und mittels der Mutter (10) festziehbar ist, wobei die Mutter (10) das Exzenterelement (8) in der Ausnehmung (7.2) verdreht.

2. Schraubenverbindung nach Anspruch 1,
**dadurch gekennzeichnet,**
**dass** die Bohrung (8.1) des Exzenterelementes (8) um eine Distanz (d) aus der Exzentermitte (M) verschoben ist, wobei die Exzentermitte (M) der Mitte der Ausnehmung (7.2) entspricht.

3. Schraubenverbindung nach einem der Ansprüche 1 oder 2,
**dadurch gekennzeichnet,**
**dass** das Exzenterelement (8) im wesentlichen die Form eines halben Zylinders aufweist.

4. Schraubenverbindung nach Anspruch 3,
**dadurch gekennzeichnet,**
**dass** das Exzenterelement (8) am einen Ende einen Kragen (8.2) aufweist, der sich am Rand der Ausnehmung (7.2) abstützt.

5. Schraubenverbindung (1) nach einem der Ansprüche 1 bis 4 zum Verbinden von Querträgern (11) mit einem Fachwerk (6).

6. Fahrtreppe oder Fahrsteig mit mindestens einer Schraubenverbindung nach einem der Ansprüche 1 bis 4.

7. Aufzug mit mindestens einer Schraubenverbindung nach einem der Ansprüche 1 bis 4.

8. Verwendung der Schraubenverbindung nach einem der Ansprüche 1 bis 5 zum Verbinden von Bauteilen einer Fahrtreppe bzw. eines Fahrsteiges.

9. Verwendung der Schraubenverbindung nach einem der Ansprüche 1 bis 4 zum Verbinden von Bauteilen von Aufzügen, Seilbahnen oder von Einrichtungen der Fördertechnik oder des Maschienenbaus.

## Claims

1. Screw joint with anti-twist plate for joining components (11,7,6.1) by means of at least one screw (9) and by means of at least one nut (10), wedging means (8) being provided to prevent rotation,
**characterized in that**
provided in one component (11,7,6.1) is a hole (12) and in another component (7) a receptacle hole (7.2) to accommodate an eccentric element (8) acting as wedging means, the screw (9) penetrating the hole of the one component (11,7,6.1) and a hole (8.1) of the eccentric element (8) and being tightenable by means of the nut (10), the nut (10) turning the eccentric element (8) in the opening (7.2).

2. Screw joint according to Claim 1,
**characterized in that**
the hole (8.1) of the eccentric element (8) is offset by a distance (d) from the axis of symmetry of the eccentric (M), the axis of symmetry of the eccentric (M) being aligned with the axis of symmetry of the receptacle hole (7.2).

3. Screw joint according to one of claims 1 or 2,
**characterized in that**
the eccentric element (8) has essentially the form of a half cylinder.

4. Screw joint according to Claim 3,
**characterized in that**
the eccentric element (8) has at one end a flange (8.2) that rests against the circumference of the receptacle hole (7.2).

5. Screw joint (1) according to one of claims 1 to 4 for joining crosspieces (11) to a truss (6).

6. Escalator or moving walk with at least one screw joint according to one of claims 1 to 4.

7. Elevator with at least one screw joint according to one of claims 1 to 4.

8. Use of the screw joint according to one of claims 1 to 5 for joining components of an escalator or moving walk.

9. Use of the screw joint according to one of claims 1 to 4 for joining components of elevators, aerial cableways, cable railways, hoisting equipment, or machines.

## Revendications

1. Liaison par vissage avec une protection antirotation, pour relier des éléments de construction (11, 7, 6.1) à l'aide d'au moins une vis (9) et d'au moins un écrou (10), des moyens de calage (8) étant prévus comme protection antirotation,
**caractérisée en ce qu'**il est prévu sur un élément (11, 7, 6.1) un perçage (12) et sur l'autre élément (11, 7, 6.1) un creux (7.2) pour recevoir un élément excentrique (8) qui agit comme moyen de calage, la vis (9) traversant le perçage d'un élément (11, 7, 6.1) et un perçage (8.1) de l'élément excentrique (8) et étant apte à être serrée à l'aide de l'écrou (10), et l'écrou (10) faisant tourner l'élément excentrique (8) dans le creux (7.2).

2. Liaison par vissage selon la revendication 1, **caractérisée en ce que** le perçage (8.1) de l'élément excentrique (8) est décalé d'une distance (d) par rapport au centre d'excentrique (M), le centre d'excentrique (M) correspondant au centre du creux (7.2).

3. Liaison par vissage selon la revendication 1 ou 2, **caractérisée en ce que** l'élément excentrique (8) présente globalement la forme d'un demi-cylindre.

4. Liaison par vissage selon la revendication 3, **caractérisée en ce que** l'élément excentrique (8) présente à une extrémité une collerette (8.2) qui s'appuie sur le bord du creux (7.2).

5. Liaison par vissage (1) selon l'une des revendications 1 à 4 pour relier des traverses (11) à une ossature (6).

6. Escalier mécanique ou trottoir roulant comportant au moins une liaison par vissage selon l'une des revendications 1 à 4.

7. Ascenseur comportant au moins une liaison par vissage selon l'une des revendications 1 à 4.

8. Utilisation de la liaison par vissage selon l'une des revendications 1 à 5 pour relier des éléments de construction d'un escalier mécanique ou d'un trottoir roulant.

9. Utilisation de la liaison par vissage selon l'une des revendications 1 à 4 pour relier des éléments de construction d'ascenseurs, de téléphériques ou de dispositifs de manutention ou de mécanique.
